# EUROPEAN PATENT APPLICATION

(11) **EP 2 730 706 A1**
(43) Date of publication of application: **14.05.2014**
(21) Application number: 12808182.5
(22) Date of filing: 03.07.2012
(51) Int. Cl.: E03C 1/26, E03C 1/282

(54) **WATER VALVE APPARATUS**

(30) Priority: 07.07.2011 CN 201120242189 U
(71) Applicant: Lin, Wen-Chien, Taichung City 407 (TW)
(72) Inventor: LIN, Cheng-yu, Taichung City 407 Taiwan (TW)
(74) Representative: Becker Kurig Straus
(86) International application number: PCT/CN2012/078087
(87) International publication number: WO 2013/004172

(57) **Abstract**

A drain valve device for use with a floor drain structure includes a base (20) and a control unit (40, S, 50) removably disposed in the base (20). The control unit (40, S, 50) includes a valve (40) and a resilient component (S) positioned between the valve (40) and the base(20). The drain valve device opens automatically as soon as water entering the base exceeds a predetermined level. The drain valve device shuts automatically as soon as water entering the base is less than a predetermined level. The drain valve device has advantages, namely simple structure, convenient of use, prevention of intrusion of odor and pests, easy to clean, and unlikely to get clogged.

## Description

### BACKGROUND OF THE INVENTION

### 1. Technical Field

The present invention relates to plumbing set forth in subclass E03C of the International Patent Classification (IPC), and more particularly, to a drain valve device capable of eliminating drain odor, and blocking intrusion of pests, such as cockroaches and mosquitoes, and effective in removing trapped hair and residue.

### 2. Description of Related Art

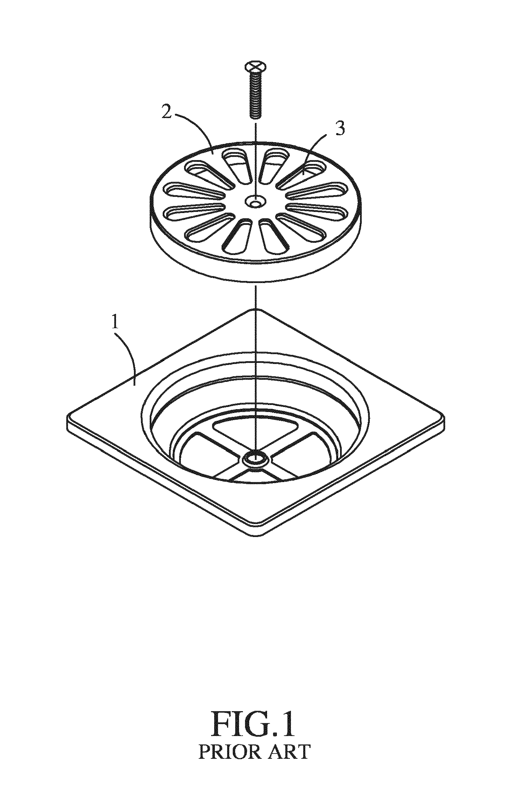

Referring to FIG. 1, a conventional floor drain structure comprises a water-collecting recess 1 and a plate strainer 2. A plurality of perforations 3 is disposed across the surface of the plate strainer 2 and adapted to filter out leftovers, hair, and residue. Not only is the water-collecting recess 1 in direct communication with a drainpipe, but the perforations 3 of the plate strainer 2 are also open fully; hence, odor builds up in the drainpipe and seeps into the house through the perforations 3 readily. Furthermore, the end section of the drainpipe is exposed outdoors; as a result, pests, such as cockroaches and mosquitoes, are likely to intrude into the house and thereby cause diseases, such as Dengue fever, to the household. Hence, the aforesaid drawbacks of the conventional floor drain structure pose a threat to home hygiene and remain unsolved.

Various odor-proof floor drain structures developed by manufacturers are not free from drawbacks, namely not effective in filtration, not convenient to clean, and not durable, and thus the prior art still has room for improvement.

### SUMMARY OF THE INVENTION

In view of the aforesaid drawbacks of the prior art, it is an objective of the present invention to provide a drain valve device for shutting a drain vent to thereby achieve enhanced pest-proofing and odor-proofing.

Another objective of the present invention is to provide a drain valve device which is easy to clean and unlikely to get clogged.

In order to achieve the above and other objectives, the present invention provides a drain valve device, comprising: a base being hollow, cylindrical and having a bottom at which at least one through hole is disposed; a cover disposed at the base and having a drain vent; and a control unit detachable installed in the base for linear motion, as soon as an amount of water entering the base exceeds a predetermined level, the control unit allow to move away from the cover to open the drain valve device, and the control unit allow to move forward to the cover to close the drain valve device when the amount of water entering the base is less than the predetermined level.

Compared with the prior art, the present invention has advantages as follows: the drain valve device is structurally simple; the drain valve device features ease of use, because as soon as the amount of water entering a base through drain holes of a cover exceeds a predetermined level, the drain valve device opens automatically to allow the water to be discharged from the base; and drain valve device is effective in filtration to prevent hair and residue from gaining direct access to a drainpipe and thereby prevent the drainpipe from getting clogged.

### BRIEF DESCRIPTION OF THE DRAWINGS

FIG. 1 is an exploded view of a conventional floor drain structure;
FIG. 2 is a cutaway view of a drain valve device assembled according to the first embodiment of the present invention;
FIG. 3 is an exploded view of the drain valve device according to the first embodiment of the present invention;
FIG. 4 is a cross-sectional view of the drain valve device assembled according to the first embodiment of the present invention;
FIG. 5 is a cross-sectional view of the drain valve device taken along line B-B of FIG. 4;
FIG. 6a is a schematic view of the drain valve device according to the first embodiment of the present invention, illustrating a mode of draining water with the drain valve device;
FIG. 6b is a schematic view of the drain valve device according to the first embodiment of the present invention, illustrating another mode of draining water with the drain valve device;
FIG. 7 is a schematic view of the drain valve device according to the first embodiment of the present invention, illustrating how the drain valve device is cleaned;
FIG. 8 is a schematic view of the drain valve device according to the first embodiment of the present invention, illustrating how the drain valve device prevents intrusion of cockroaches;

### DETAILED DESCRIPTION OF THE EMBODIMENTS OF THE INVENTION

The detailed structures and anticipated advantages of the present invention are illustrated hereunder with specific embodiments and drawings.

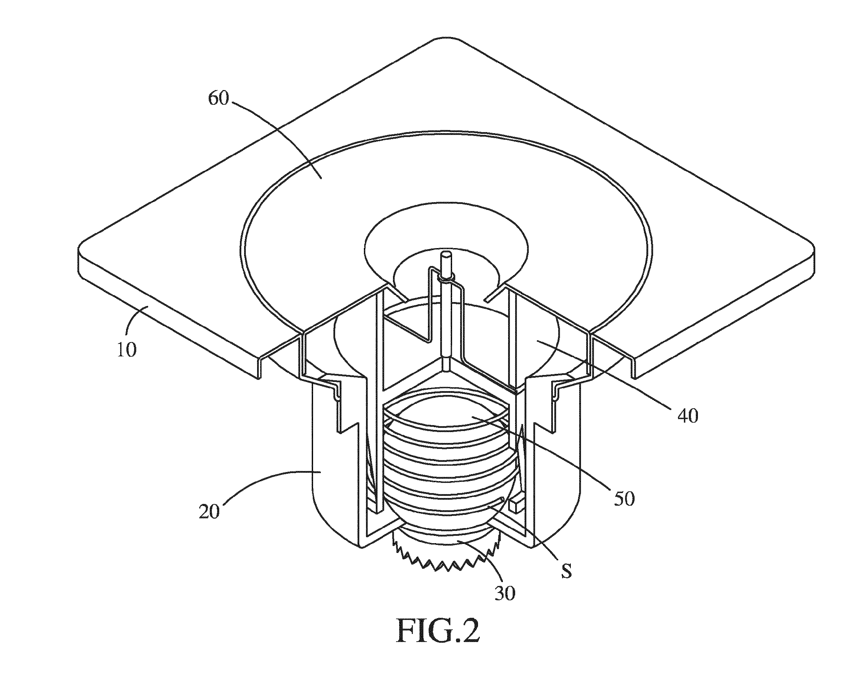

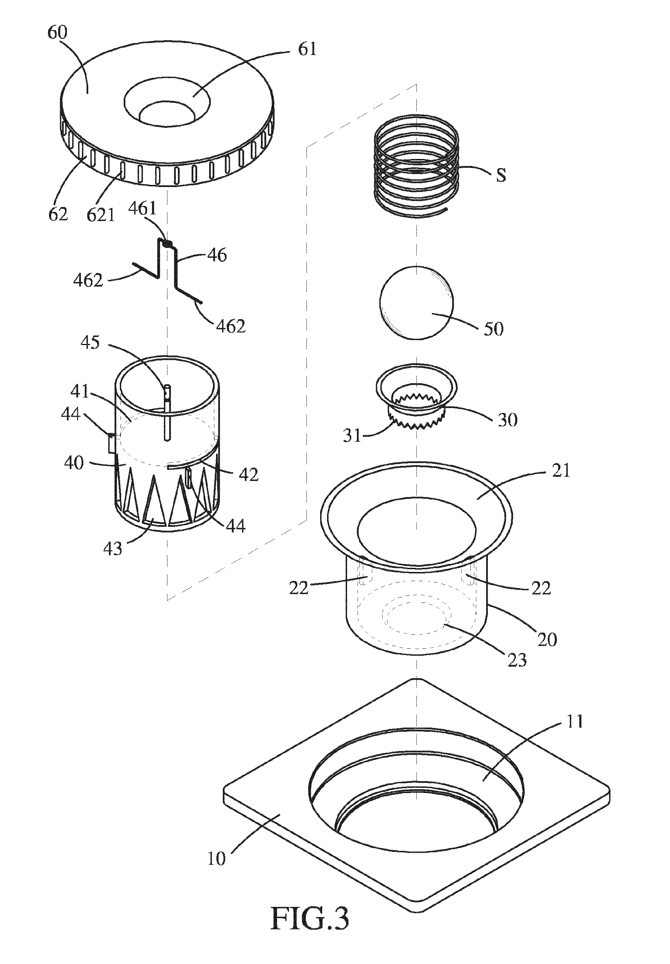

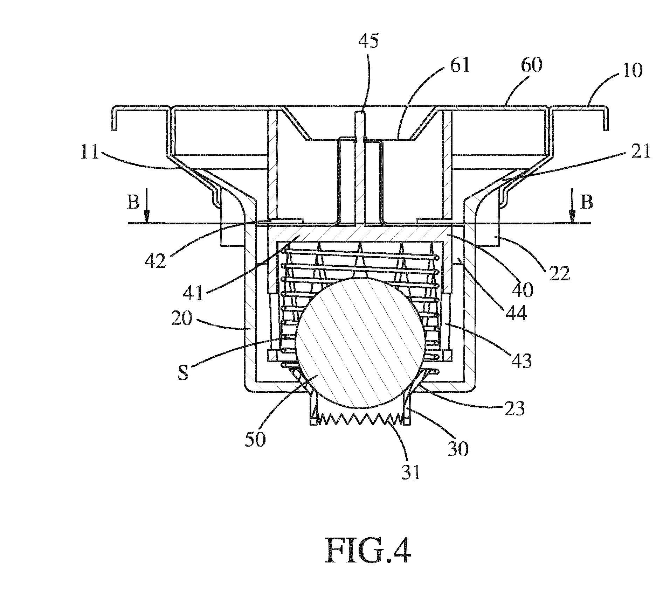

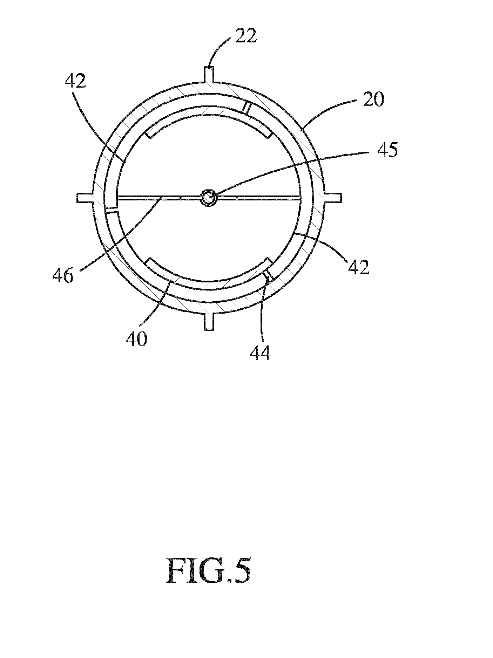

The present invention provides, in a first embodiment thereof, a drain valve device for use with a floor drain structure. Referring to FIG. 2 through FIG. 5, the drain valve device according to the first embodiment of the present invention is installed on a frame 10 of the floor drain structure. The frame 10 is centrally hollowed out and extended downward to form an inner flange 11.

The drain valve device comprises a base 20 and a control unit. The control unit comprises a drain element 30, a valve 40, a resilient component S, and a floating component 50.

The base 20 is hollow and cylindrical. The top rim of the base 20 extends and expands outward to form an outer flange 21 which can rest on the inner flange 11 of the frame 10. The base 20 is peripherally equipped with a plurality of wings 22 which can abut against the inner wall of the frame 10 and thus function as a positioning structure whereby the base 20 is confined to the center of the frame 10. A tapered through hole 23 is disposed at the center of the bottom of the base 20.

The base 20 further comprises a cover 60 for covering the base 20. A drain vent 61 is centrally disposed at the cover 60. The cover 60 extends downward to form an annular protruding portion 62. A plurality of slits 621 is disposed at the circumferential side of the annular protruding portion 62 and adapted to allow water to pass through and filter out hair and residue.

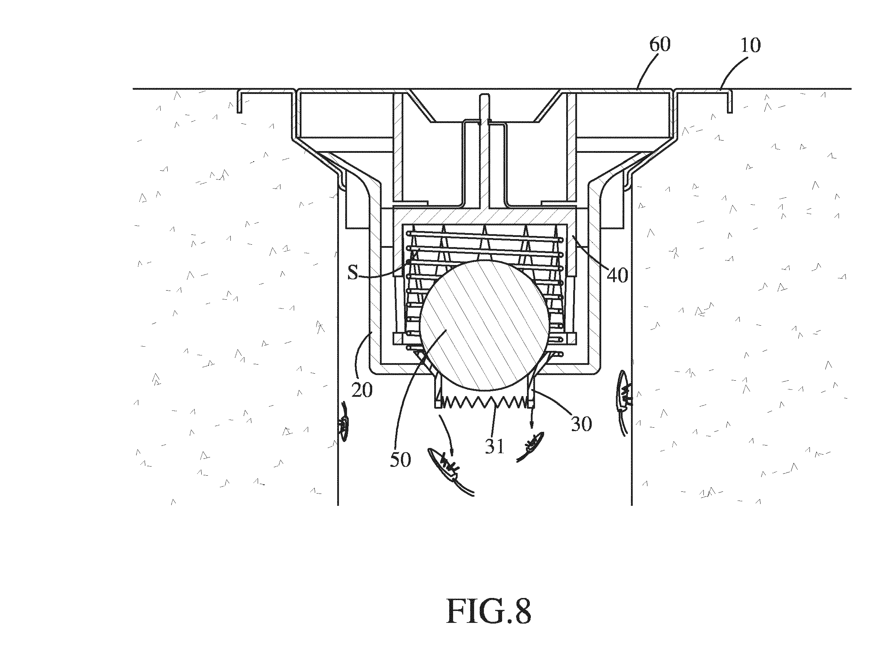

The upper portion of the drain element 30 is tapered and thereby adapted to be confined to the through hole 23 of the base 20. The bottom end of the drain element 30 is cylindrical and has a plurality of serrate portions 31 for preventing intrusion of cockroaches and mosquitoes from a drainpipe as shown in FIG. 8.

The valve 40 is hollow and cylindrical. A baffle board 41 is disposed inside the valve 40 and positioned midway to partition the inside of the valve 40 into a water storage space above and a receiving space below. At least one drain hole 42 is disposed at the periphery of the water storage space. In this embodiment, the drain holes 42 are in the number of two and are for use in draining water which might otherwise accumulate in the water storage space. The receiving space has a plurality of guide holes 43. The valve 40 peripherally forms a plurality of positioning ribs 44 whereby the valve 40 is disposed centrally in the base 20. The receiving space receives the resilient component S which exerts an upward force on the cover 60.

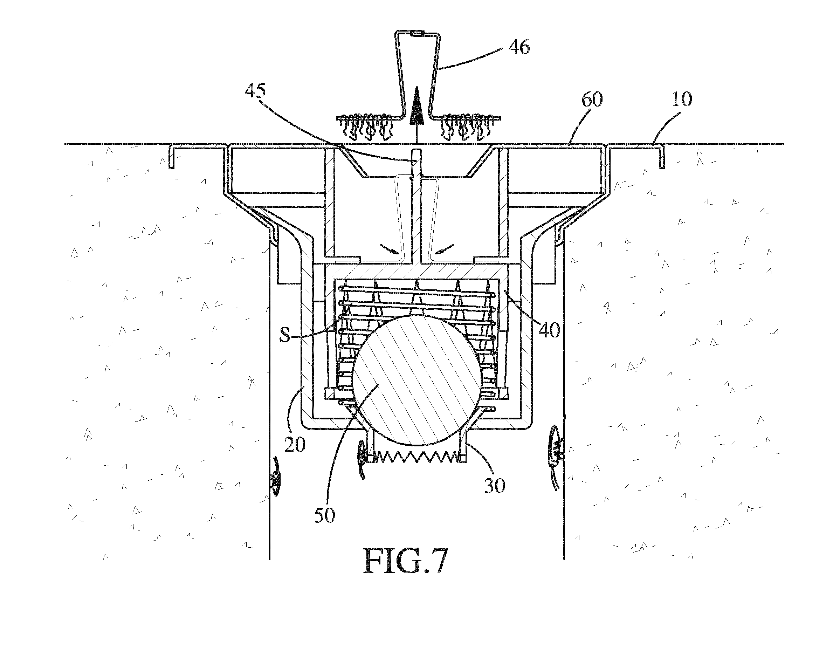

A post 45 is disposed on the baffle board 41 and disposed centrally in the water storage space to carry a hair collector 46. The hair collector 46 is made from a piece of iron wire bent in a manner to allow the hair collector 46 to consist of a sleeve 461 and two end pins 462 extending outward therefrom. The sleeve 461 can be disposed around the post 45. Hence, not only can leftovers, hair, and residue be retained in the water storage space, but the drain valve device is also easy to clean, as shown in FIG. 7.

According to the present invention, variants of the hair collector 46 are feasible. For instance, a hair collector made from a piece of iron wire bent in a manner to form a helical structure can be installed in the water storage space to press against the cover 60 and the baffle board 41 and held therebetween so as to effectuate filtration. Preferably, one end of the hair collector passes through the drain vent 61 of the cover 60.

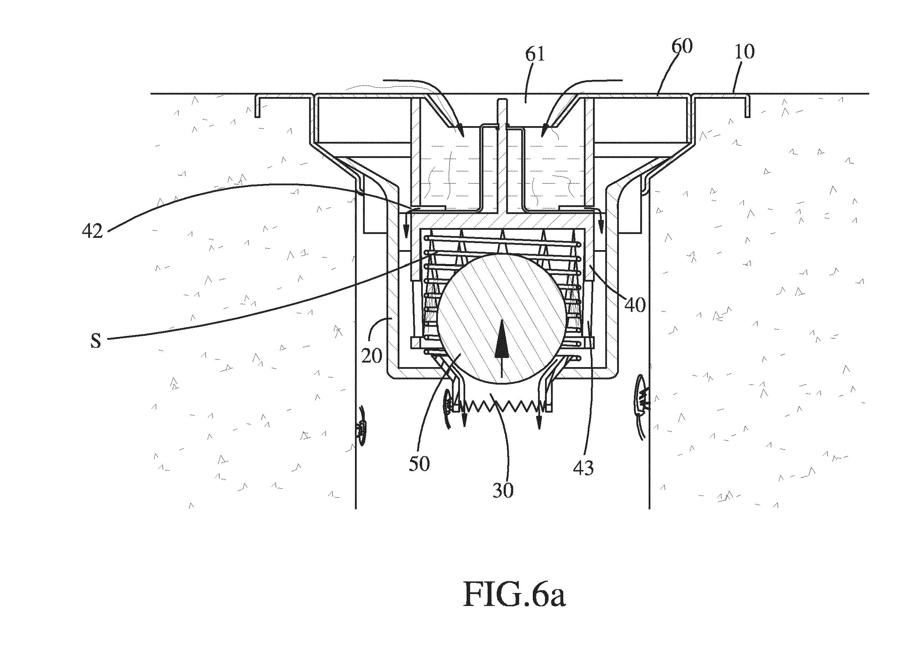

The resilient component S is disposed in the valve 40 and provides a resilient force to make the valve move upward. As soon as the weight of the water accumulated in the water storage space decreases to less than the resilient force of the resilient component S, the top rim of the valve 40 pushes up and seals the drain vent 61, as shown in FIG. 6a.

The floating component 50 is substantially spherical in shape, has a diameter slightly larger than that of the through hole 23, and has a specific gravity less than 1 and thus floats in water. The floating component 50 is disposed above the drain element 30 and adapted to prevent intrusion of cockroaches, mosquitoes, and odor from the drainpipe.

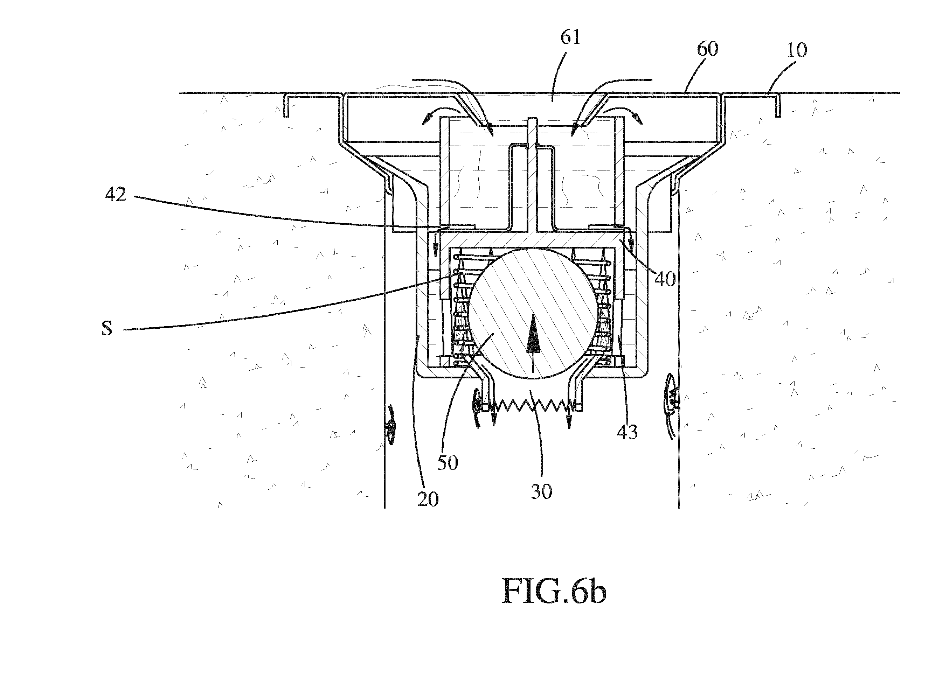

Water introduced into the base 20 accumulates gradually in the water storage space of the valve 40. Once the weight of the accumulated water exceeds a resilient force of the resilient component S, the valve 40 will be moved downward under the weight of the accumulated water and thus guided into the base 20. As soon as the water reaches the bottom of the drain element 30, the floating component 50 becomes afloat automatically, thereby allowing the water to be drained into the drainpipe via the drain element 30, as shown in FIG. 6. Upon completion of drainage, the floating component 50 seals the drain element 30 again.

Hence, the drain valve device of the present invention is characterized in that a control unit disposed in a base 20, coupled with the amount of water entering the base 20, controls the drain valve device to open or shut. The drain valve device opens automatically as soon as the amount of water inside the base 20 exceeds a predetermined level. The drain valve device shuts automatically as soon as the amount of water inside the base 20 is less than a predetermined level.

Depending on water flow rate, the drain valve device of the present invention operates in two scenarios as follows:

### Scenario 1

Referring to FIG. 6a, the flow rate of water entering the drain vent 61 is so low that the weight of water accumulated in the water storage space of the valve 40 is less than the resilient force of the resilient component S, and in consequence the top rim of the valve 40 presses against the cover 60; as a result, the water accumulated in the water storage space of the valve 40 is delivered to the bottom of the base 20 after passing through the at least one drain hole 42 and the guide holes 43, whereas the floating component 50 drifts upward automatically to thereby allow the water to be drained into the drainpipe. Upon completion of drainage, the drain element 30 shuts automatically.

### Scenario 2

Referring to FIG. 6b, the flow rate of water entering the drain vent 61 is so high that the weight of water accumulated in the water storage space of the valve 40 is larger than the resilient force of the resilient component S, and in consequence the valve 40 moves downward; as a result, the water accumulated in the water storage space of the valve 40 flows over the top rim of the valve 40, passes through the gap between the valve 40 and the base 20, and is finally delivered to the bottom of the base 20 to thereby cause the floating component 50 to drift upward and allow the water to be drained into the drainpipe. Upon completion of drainage, the drain element shuts automatically.

In both of the two aforesaid scenarios, residue is filtered out of water and locked in the water storage space of the valve 40 effectively.

The control unit of the drain valve device is illustrated with a preferred embodiment of the present invention. In another embodiment of the present invention, the operation of the control unit relies solely upon the valve 40, the resilient component S, and the cover 60, as the control unit controls the drain valve device to open or shut, using the weight of the water accumulated in the water storage space to counterbalance the resilient force of the resilient component S. In yet another embodiment of the present invention, the control unit comprises a floating component, wherein one and only one said through hole 23 is disposed at the bottom of the base 20; once water accumulated in the base is sufficient to cause the floating component 50 to drift upward, the drain valve device will open and start to admit water; and, once water accumulated in the base 20 is insufficient to cause the floating component 50 to drift upward, the drain valve device will shut automatically.

Optionally, a filtering layer made of a porous material, such as sponge, is disposed in the drain hole 42 of the water storage space of the valve 40 and adapted to enhance filtration in the course of drainage of the accumulated water. A slender handle is coupled to each of the two sides of the floating component 50 and passes through the drain hole of the cover 60 and the through hole 23 of the base 20. A user can pull the slender handles by hand to adjust the position of the floating component S and thereby allow the floating component S to be positioned at the through hole 23 effectively.

The resilient component S of the present invention is a compression spring. An experiment is performed on the resilient component S, wherein a drainpipe with a diameter of 2 inches is laid at a vertical depth of 10 inches (known as the "background condition"). The result of the experiment indicates that, preferably, the resilient component S is compressed by a distance of 13 to 15 millimeters under the weight of water of 30 to 40 grams, such that the spring constant K is calculated to be 2×10⁻³ to 3×10⁻³ kgf/mm. A change in the background condition results in a change in the dimensions of the valve 40, the dimensions of the base 20, and the dimensions of the through hole 23 and thereby a change in the flow speed and the flow rate of water. Given the aforesaid relationship, if it is assumed that the water flow speed remains unchanged, the water flow rate will be directly proportional to the cross-sectional area of the drainpipe, and thus the compressed distance of the resilient component (that is, the distance between the top rim of the valve 40 and the bottom side of the cover 60) will be directly proportional to the drainpipe diameter. Hence, the spring constant K of the resilient component of the present invention is directly proportional to the drainpipe diameter (i.e., the diameter of the drain hole of the cover), whereas the diameter of the drain vent 61 of the cover 60 is also directly proportional to the diameter of the drainpipe.

The drain valve device of the present invention can also be applicable to water tanks and bathtubs etc. It is because the drain valve device of the present invention can be for use in water storage, provided that a water seal is provided and adapted to seal the drain vent 61 of the cover 60 in the aforesaid embodiments.

In conclusion, the present invention provides a drain valve device with advantages, namely simple structure, ease of use, prevention of intrusion of odor and pests, easy to clean, and unlikely to get clogged.

## Claims

1. A drain valve device, comprising:
a base (20) being hollow and cylindrical and having a bottom at which at least one through hole (23) is disposed;
a cover (60) disposed at the base (20) and having a drain vent (61); and
a control unit (40, S, 50) detachable installed in the base (20) for linear motion, as soon as an amount of water entering the base (20) exceeds a predetermined level, the control unit (40, S, 50) allow to move away from the cover (60) to open the drain valve device, and the control unit (40, S, 50) allow to move forward to the cover (60) to close the drain valve device when the amount of water entering the base is less than the predetermined level.

2. The drain valve device of claim 1, wherein the control unit comprising a hollow cylindrical valve (40) corresponding to the drain vent (61), the valve (40) having a baffle board (41) to partition into a water storage space above and a receiving space below, the receiving space receiving a resilient component (S) holding between the baffle board (41) and the base (20).

3. The drain valve device of claim 2, wherein at least one drain hole (42) is disposed at a periphery of the water storage space.

4. The drain valve device of claim 2, wherein a plurality of positioning ribs (44) is disposed at a periphery of the valve (40).

5. The drain valve device of claim 2, wherein the control unit (40, S, 50) comprising a floating component (50) located in the bottom of the base (20), the floating component (50) is substantially spherical in shape and has a diameter larger than that of the through hole (23).

6. The drain valve device of claim 1, wherein the amount of the at least one through hole (23) is one and disposed at the center of a bottom of the base(20), the control unit (40, S, 50) comprising a floating component (50) located in a bottom of the base (20), the floating component (50) is substantially spherical in shape and has a diameter larger than that of the through hole (23).

7. The drain valve device of claim 5 or 6, wherein the through hole (23) is tapered and disposed at the center of a bottom of the base (20).

8. The drain valve device of claim 7, wherein the control unit (40, S, 50) comprising a drain element (30) having a tapered upper portion and thereby adapted to be confined to the through hole (23) of the base (20).

9. The drain valve device of claim 8, wherein a bottom end of the drain element (30) is cylindrical and has a plurality of serrate portions (31).

10. The drain valve device of claim 2, wherein a hair collector (46) is disposed in the water storage space of the valve (40).

11. The drain valve device of claim 10, wherein the hair collector (46) is made from a piece of iron wire bent in a manner to allow the hair collector (46) to consist of a sleeve (461) and two end pins (462) extending outward therefrom, and the sleeve (461) is disposed around a post disposed on the baffle board (41) of the valve (40).

12. The drain valve device of claim 3, wherein a filtering layer made of a porous material is disposed in the drain hole.

13. The drain valve device of claim 6, wherein a slender handle is coupled to each of the two sides of the floating component (50) and passes through the drain vent (61) of the cover (60) and the through hole (23) of the base (20).

14. The drain valve device of claim 2, wherein the resilient component (S) being a compression spring with a spring constant of 2x 10⁻³ to 3x 10⁻³ kgf/mm.

15. The drain valve device of claim 14, wherein the spring constant of the resilient component (S) is directly proportional to a diameter of the drain vent (61) of the cover (60).

16. The drain valve device of claim 1 or 2 or 6, wherein the cover (60) is tablet-shaped and extends downward to form an annular protruding portion (62).

17. The drain valve device of claim 16, wherein a plurality of slits (621) is disposed at the circumferential side of the annular protruding portion (62).
